# EUROPEAN PATENT SPECIFICATION

(11) **EP 2 943 621 B1**
(45) Date of publication and mention of the grant of the patent: **04.09.2019**
(21) Application number: 14716973.4
(22) Date of filing: 08.01.2014
(51) Int. Cl.: B29L 9/00, B29L 31/00, E04F 13/12, B29C 53/06, B29L 31/10

(54) **PROCESS FOR PRODUCING COMPOSITE FINISHING PANELS AND PANEL OBTAINED WITH THIS PROCESS**
VERFAHREN ZUR HERSTELLUNG VON VERBUNDDECKPLATTEN SOWIE MIT DIESEM VERFAHREN ERHALTENE PLATTE
PROCÉDÉ POUR LA PRODUCTION DE PANNEAUX DE FINITION COMPOSITES ET PANNEAU OBTENU À L'AIDE DE CE PROCÉDÉ

(30) Priority: 11.01.2013 IT CR20130002
(43) Date of publication of application: 18.11.2015
(73) Proprietor: Steel Color SpA, 26033 Pescarolo ed Uniti (CR) (IT)
(72) Inventor: GUINDANI, Cristoforo, 25020 Pralboino (CR) (IT); RICCI, Stefano, Vescovato (CR) (IT)
(74) Representative: Mari, Marco Giovanni
(86) International application number: PCT/IT2014/000003
(87) International publication number: WO 2014/108927

(56) References cited:
- EP-A1- 1 527 844
- US-A- 4 833 858

## Description

The invention relates to the sector of building and cladding materials.

More in detail, the invention relates to a process for producing composite finishing and cladding panels for interior and exterior walls of buildings or design objects and installations and to a panel obtained with this process.

There are known composite finishing panels having a sandwich structure, where the two outer layers are made of thin aluminium or steel sheet and the inner core layer is made of a lightening material. The edges of the structure are bent to obtain box panels.

The use of prefabricated sandwich panels is becoming increasingly widespread for the rapid cladding of building walls, such as industrial buildings, but also of more prestigious buildings, such as offices and shopping centres.

Currently these panels are produced using two coils of sheet metal, which, as they are unrolled, are also bonded together, by pressing, interposing two layers of glue and the core material, which can, for example, be a sheet of solid plastic or of honeycomb aluminium.

The strip is cut into single portions only after bonding of the two outer sheets with the core material, and each composite sheet thus obtained is punched, milled and bent to obtain the single panel.

Document EP 1 527 844 relates to a process for the mutual fixing of already assembled composite panels, or for folding on itself of a single panel. Such panels are of the so-called "sandwich" type, having two outer layers of finish and an inner layer of support.

These production processes have limits and disadvantages, as does the panel directly obtained.

Firstly, in conventional machining processes it is necessary to use sheet metal with very limited thicknesses, typically 2-3 tenths of millimetre, as otherwise cutting and punching of the sandwich panels would be practically impossible, since these operations must be performed on the materials already fully bonded to one another.

The different nature of the bonded materials further complicates machining operations, which must necessarily involve all the layers simultaneously.

Metal sheets that are too thin are very delicate to machine, and if panels of large dimensions are produced, considerable bending and deformation of the panels would occur.

Moreover, in the case of steel sheets, the use of very thin panels does not allow the surfaces to be treated with particular aesthetic finishings, but limits this to the use of typical finishings of sheet metal rolled in coils, i.e. polishing or satin finish. Consequently, the panels obtained have a very limited range of surface finishings, not being suitable for all possible applications.

Mechanical machining operations to define the panel coupling systems can only be performed after the panel has been fully assembled, with evident problems of management, handling and possible damage to a product that reaches the cutting and milling machines in its finished state.

The invention intends to overcome these limits, by defining a process for producing composite panels aimed at obtaining a strong and simultaneously lightweight panel, with excellent planarity and having any of the aesthetic finishings in the field of known stainless steel sheet treatments.

Therefore, the main aim is to provide a process that performs the machining operations in separate steps, in sequence on the single layers that are then bonded to obtain the composite material adapted to define the structure of the panel, so as to produce a panel that can have a series of shapings and accessories for coupling, fixing and installation obtained directly in the structure thereof.

These aims are achieved with a process for producing composite finishing panels comprising mechanical works performed in separate steps, wherein these steps are:
- providing a stainless steel sheet having at least the face intended to face the outside of the panel with a surface finishing suitable for the use;
- performing mechanical machining operations on said sheet;
- providing a sheet of core material;
- bonding, by gluing, said stainless steel sheet to said sheet of core material;
- performing mechanical machining operations on said sheet of core material in an area that defines a perimeter edge of said core sheet;
- bonding, by gluing, a counterbalancing metal sheet to said sheet of core material, without involving said perimeter edge;
- bending the perimeter edges of said stainless steel sheet and of said sheet of core material, which are bonded together, towards said counterbalancing sheet to define an open box structure of the panel.

In particular, said stainless steel sheet has a thickness greater than 0.3 mm and, advantageously, said thickness is between 0.5 and 0.8 mm.

According to a first preferred embodiment of the invention, the surface finishing of said face of said sheet is of the type that is satin finished, polished, mirror finished, electrolytically coloured, PVD coloured, shot blasted, printed, embossed, rigidized, provided with patterns, geometric forms, watermarks, silk screen printing, etc...

Moreover, said core material is selected from plastic composites, MDF, aluminium sheets or honeycomb aluminium.

According to further embodiments of the invention, said mechanical machining operations performed on said stainless steel sheet and said sheet of core material comprise punching, notching, bending, perforation.

In particular, the mechanical machining operations performed on said core sheet cooperate with the mechanical machining operations performed on said stainless steel sheet to form the final open box structure of the panel.

Moreover, said mechanical machining operations performed on said sheet of core material comprise the milling of bend lines.

According to further embodiments of the invention, said step of bonding by gluing comprises the use of roller presses.

According to possible embodiments of the invention, said counterbalancing sheet is made of stainless steel, or galvanized steel or pre-painted steel.

In a particularly preferred embodiment of the invention, said process comprises the further step of fixing the bent perimeter edges of said stainless steel sheet and of said sheet of core material by means of mechanical bonding means.

The invention also relates to a composite finishing panel comprising an open box structure obtained by means of the process described above.

The composite panel produced according to the invention has numerous advantages, mainly due to the nature of the components of which it is formed and to the production technique used.

Firstly, the machining process in separate steps allows the use of steel sheets also with greater thicknesses and this advantageously allows the use of steel sheets having any type of aesthetic surface finishing, which would not be possible on the sheet metal strips used conventionally, which have limited thicknesses to allow simultaneous machining of the prebonded material.

A wide range of colours and finishings allows maximum planning and design freedom, making the panels extremely versatile.

The increased thicknesses also allow panels of greater dimensions and width to be produced, once again suitable for any use.

Even more advantageously, panels of large format can be installed rapidly, and therefore with reduced assembly times and limited costs.

The use of stainless steel sheets guarantees maximum resistance to weathering and to attack of chemical agents present in the atmosphere, preserving the panels over time.

Positioning of a counterbalancing sheet contributes to the stability and to the perfect planarity of the panel over time, guaranteeing an excellent weight to bending strength ratio, even for the largest panel formats.

Even more advantageously, due to the counterbalancing sheet, the panels remain dimensionally stable and planar even in the presence of different thermal dilation of the outer steel sheet and of the core sheet.

Finally, the mechanical machining steps are extremely simple: milling, edge notching, corner notching and bending of the sheet are carried out with standard tools, just as gluing of the various sheets takes place using conventional presses.

The advantages of the invention will be more apparent below in the description of a preferred method of the process and a preferred method of producing the panel, provided by way of non-limiting example, and with the aid of the figures, wherein: :
- Figs. 1a-1d represent, schematically with proportions deformed for clarity of representation and in axonometric views, the main steps of the process for producing composite finishing panels according to the invention;
- Figs. 2 and 3 represent, in cross section and in axonometric view, a composite finishing panel obtained by means of the process of Fig. 1.

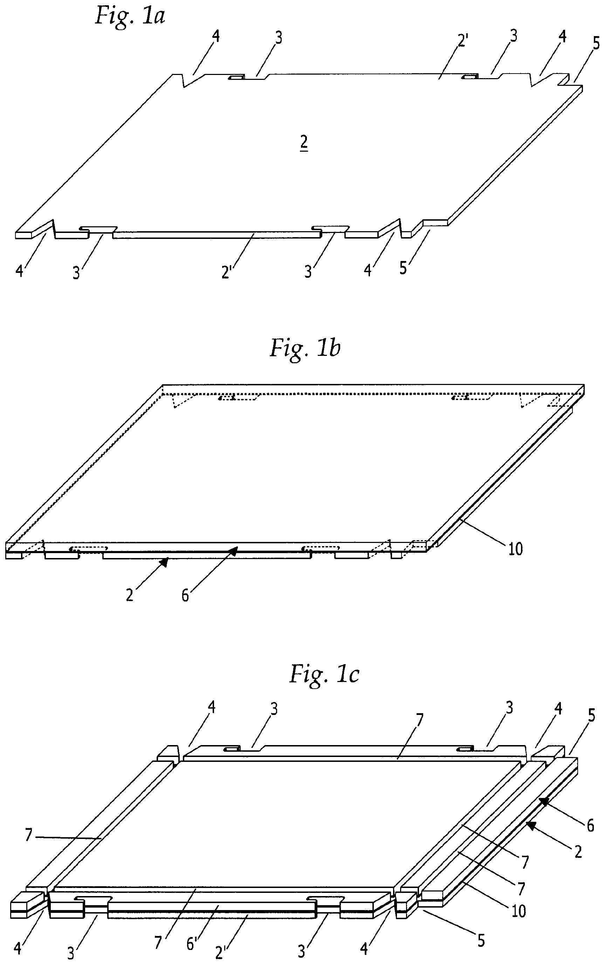

With reference to Fig. 1a, the process for producing composite finishing panels 1 comprises a first step of providing a stainless steel sheet 2.

Said sheet 2 is sized according to the final dimensions of the panel 1 to be obtained and it is around 0.6 mm thick. Excellent results are obtained with thicknesses of the stainless steel sheet 2 between 0.5 and 0.8 mm.

Said stainless steel sheet 2 has already been machined and treated previously on at least one face, the one facing the outside of the panel, to obtain the required surface finishing.

This surface finishing can be, for example, selected from one or more treatments including satin finishing, polishing, mirror finishing, electrolytic colouring, PVD colouring, shot blasting, printing, embossing, rigidizing, impression of patterns, geometric shapes, watermarks, silk screen printing, etc...

Appropriate mechanical machining operations are then performed on said sheet 2.

In particular, L-shaped edge notches 3 are made on the perimeter edge 2' of the sheet 2, which will then define the means for coupling of the panel 1 to the structure to be clad.

V-shaped edge notches 4 and corner notches 5 are instead performed at the corners of the sheet 2, to prepare the points for subsequent bending of the edge 2' of the sheet 2 and for forming the final box structure of the panel.

With reference to Fig. 1b, this shows a subsequent step of the process for producing composite panels 1, in particular the step of providing a sheet of core material 6 to be bonded, by gluing, to said stainless steel sheet 2 already machined.

Besides providing the panel 1 with structure, said sheet of core material 6 also has a lightening function.

Therefore, said material is selected from plastic material, such as polyethylene, medium density wood fibers or honeycomb aluminium, or other materials of known type suitable for the purpose.

Said sheets 2, 6 are glued together with a layer of glue 10 and the aid of roller presses of known type, between which they are fed.

With reference to Fig. 1c, the same mechanical machining operations 3, 4, 5 performed previously on the perimeter edge 2' of the stainless steel sheet 2 are performed on said sheet of core material 6, corresponding exactly thereto.

Moreover, a mechanical milling operation is performed on said core sheet 6, aimed at defining bend lines 7 required for bending the sheet and shaping the panel 1.

Said milling operations and bend lines 7 can be rectangular or V-shaped, and are produced using disc or end mills. These milling operations 7 are performed by removing core material but preserving the steel finishing sheet 2. The decreased thickness of the core material 6 will subsequently allow easy bending of the sheet 2. The shape of the groove will determine the bending radius.

All the mechanical machining operations 3, 4, 5, 7 are performed using a machining centre.

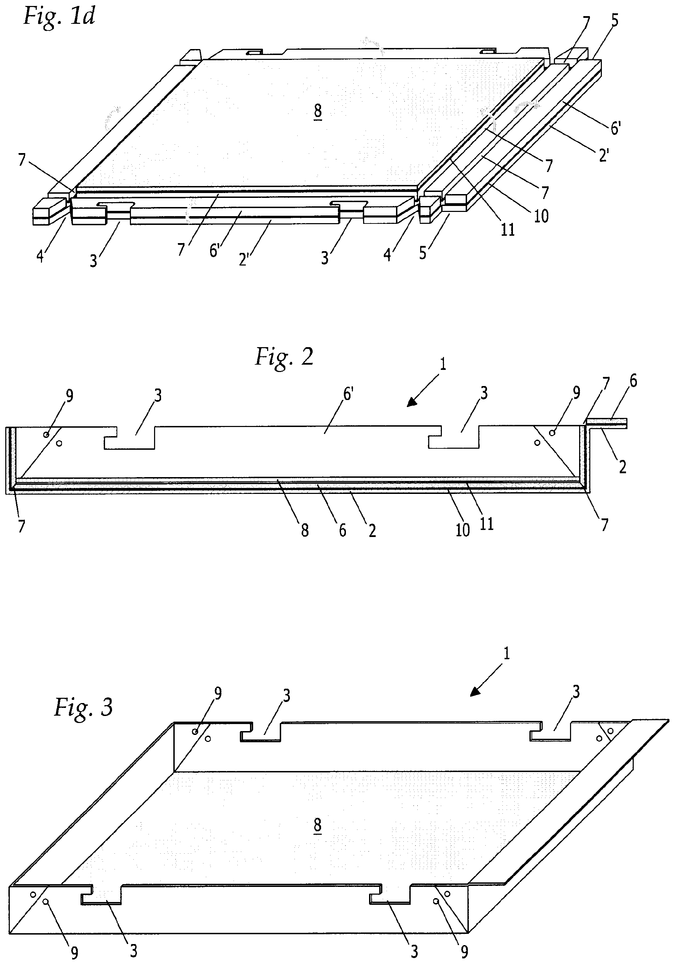

With reference to Fig. 1d, there is shown a subsequent step of the process for producing composite panels 1, in particular the step of providing a counterbalancing sheet 8 to be bonded, again by gluing with a layer of glue 11, to said core sheet 6.

Said counterbalancing sheet 8 is made of high strength material whether this is stainless steel, galvanized steel or pre-painted steel. Alternatively, different materials can be used, providing they have a coefficient of thermal expansion similar to stainless steel.

As it is evident from Fig. 1d, said counterbalancing sheet 8 is arranged in the central area of the core sheet 6 and does not involve its perimeter edge 6' and the corresponding perimeter edge 2' of the steel sheet 2 below. Therefore, the counterbalancing sheet 8 does not cover the L-shaped and the V-shaped edge notches 3, 4 and the corner notches 5 produced previously, nor does it require to be machined.

Moreover, said counterbalancing sheet 8 is arranged inside the bend line 7 previously produced in the core sheet 6.

Finally, the perimeter edges 2', 6' of the stainless steel sheet 2 and of the core sheet 6, are bent towards the counterbalancing sheet 8, along the bend lines 7 provided.

As is clearly shown in Figs. 2 and 3, said bending step allows the panel 1 to be closed laterally, giving it a box shape and greater stiffness.

To fix the raised edges and stabilize the panel 1 thus obtained it is possible to use mechanical coupling means 9, of screw or rivet type in cooperation with plates.

Due to the bending of the sheets 2, 6, the L-shaped edge notches 3 that define the means for coupling the panel 1 to the structure of the building are obtained directly by machining the panel 1 and are automatically arranged on the lateral faces of the same panel, without the need to perform further machining operations or to apply external components.

## Claims

1. A process for producing composite finishing panels (1) comprising mechanical works performed in separate steps, wherein these steps are:
- providing a stainless steel sheet (2) having at least the face intended to face the outside of the panel with a surface finishing suitable for the use;
- performing mechanical machining operations (3, 4, 5) on said sheet (2);
- providing a sheet of core material (6);
- bonding, by gluing, said stainless steel sheet (2) to said sheet of core material (6);
- performing mechanical machining operations (3, 4, 5, 7) on said sheet of core material (6) in an area that defines a perimeter edge of said core sheet;
- bonding, by gluing, a counterbalancing metal sheet (8) to said sheet of core material (6), without involving said perimeter edge (6');
- bending the perimeter edges (2', 6') of said stainless steel sheet (2) and of said sheet of core material (6), which are bonded together, towards said counterbalancing sheet (8) to define an open box structure of the panel.

2. Process according to claim 1, **characterized in that** said stainless steel sheet (2) has a thickness greater than 0.3 mm.

3. Process according to claim 2, **characterized in that** said stainless steel sheet (2) has a thickness between 0.5 and 0.8 mm.

4. Process according to claim 1, **characterized in that** the surface finishing of said face of said sheet (2) is of the type that is satin finished, polished, mirror finished, electrolytically coloured, PVD coloured, shot blasted, printed, embossed, rigidized, provided with patterns, geometric forms, watermarks, silk screen printing, etc...

5. Process according to claim 1, **characterized in that** said core material (6) is selected from plastic composites, MDF, aluminium in sheet or honeycomb aluminium.

6. Process according to claim 1, **characterized in that** said mechanical machining operations (3, 4, 5), performed on said stainless steel sheet (2) and said sheet of core material (6) comprise punching, notching, bending, perforation.

7. Process according to claims 1 and 6, **characterized in that** the mechanical machining operations (3, 4, 5) performed on said sheet of core material (6) cooperate with the mechanical machining operations (3, 4, 5) performed on said stainless steel sheet (2).

8. Process according to claim 1, **characterized in that** said mechanical machining operations, performed on said sheet of core material (6), comprise the milling of bend lines (7).

9. Process according to claim 1, **characterized in that** said steps of bonding by gluing comprise the use of roller presses.

10. Process according to claim 1, **characterized in that** said counterbalancing sheet (8) is made of stainless steel, or galvanized steel or pre-painted steel.

11. Process according to claim 1, **characterized in that** it comprises the further step of fixing the bent perimeter edges (2', 6') of said stainless steel sheet (2) and of said sheet of core material (6) by means of mechanical bonding means (9).

12. A composite finishing panel (1) comprising an open box structure obtained by means of the process according to the preceding claims.

## Patentansprüche

1. Ein Verfahren zur Herstellung von Verbund-Verkleidungspaneelen (1), umfassend mechanische Arbeiten, die in getrennten Schritten durchgeführt werden, wobei diese Schritte die folgenden sind:
- Bereitstellen einer Edelstahlplatte (2) mit mindestens der Fläche, die dazu bestimmt ist, der Außenseite der Platte zugewandt zu werden, mit einer für die Verwendung geeigneten Oberflächenveredelung;
- Durchführen von mechanischen Bearbeitungsvorgängen (3, 4, 5) auf besagter Platte (2);
- Bereitstellen einer Platte aus Kernmaterial (6);
- Verbinden der besagten Edelstahlplatte (2) mit der besagten Platte aus Kernmaterial (6) durch Kleben;
- Durchführen von mechanischen Bearbeitungsvorgängen (3, 4, 5, 7) auf besagter Platte aus Kernmaterial (6) in einem Bereich, der eine Umfangskante der Kernplatte definiert;
- Verbinden einer Gegengewichtsplatte aus Metall (8) mit besagter Platte aus Kernmaterial (6) durch Kleben, ohne die besagte Umfangskante (6') einzubeziehen;
- Biegen der Umfangskanten (2', 6') der besagten Edelstahlplatte (2) und der besagten Platte aus Kernmaterial (6), die miteinander verbunden sind, in Richtung der Gegengewichtsplatte (8), um eine offene Kastenstruktur der Paneele zu definieren.

2. Ein Verfahren gemäß Anspruch 1, **dadurch gekennzeichnet, dass** die besagte Edelstahlplatte (2) eine Dicke von mehr als 0,3 mm aufweist.

3. Ein Verfahren gemäß Anspruch 2, **dadurch gekennzeichnet, dass** die besagte Edelstahlplatte (2) eine Dicke zwischen 0,5 und 0,8 mm aufweist.

4. Ein Verfahren gemäß Anspruch 1, **dadurch gekennzeichnet, dass** die Oberflächenveredelung der besagten Fläche der besagten Platte (2) von dem Typ ist, der satiniert, poliert, spiegelglanzpoliert, elektrolytisch gefärbt, PVDgefärbt, gestrahlt, gedruckt, geprägt, verfestigt, mit Mustern, geometrischen Formen, Wasserzeichen, Siebdruck, etc. versehen ist...

5. Ein Verfahren gemäß Anspruch 1, **dadurch gekennzeichnet, dass** das besagte Kernmaterial (6) ausgewählt ist aus Kunststoffverbundwerkstoffen, MDF, Aluminiumblech oder Wabenaluminium.

6. Ein Verfahren gemäß Anspruch 1, **dadurch gekennzeichnet, dass** die besagten mechanischen Bearbeitungsvorgänge (3, 4, 5), die an der besagten Edelstahlplatte (2) und der besagten Platte aus Kernmaterial (6) durchgeführt werden, Stanzen, Kerben, Biegen und Perforieren umfassen.

7. Ein Verfahren gemäß den Ansprüchen 1 und 6, **dadurch gekennzeichnet, dass** die mechanischen Bearbeitungsvorgänge (3, 4, 5), die an der besagten Platte aus Kernmaterial (6) durchgeführt werden, mit den mechanischen Bearbeitungsvorgängen (3, 4, 5), die an besagter Edelstahlplatte (2) durchgeführt werden, zusammenarbeiten.

8. Ein Verfahren gemäß Anspruch 1, **dadurch gekennzeichnet, dass** die mechanischen Bearbeitungsvorgänge, die an der besagten Platte aus Kernmaterial (6) durchgeführt werden, das Fräsen von Biegelinien (7) umfassen.

9. Ein Verfahren gemäß Anspruch 1, **dadurch gekennzeichnet, dass** die besagten Schritte des Verbindens durch Kleben die Verwendung von Rollenpressen umfassen.

10. Ein Verfahren gemäß Anspruch 1, **dadurch gekennzeichnet, dass** die besagte Gegengewichtsplatte (8) aus Edelstahl, verzinktem Stahl oder vorlackiertem Stahl gefertigt ist.

11. Ein Verfahren gemäß Anspruch 1, **dadurch gekennzeichnet, dass** es den weiteren Schritt des Fixierens der gebogenen Umfangskanten (2', 6') der besagten Edelstahlplatte (2) und der besagten Platte aus Kernmaterial (6) mit Hilfe von mechanischen Verbindungsmitteln (9) umfasst.

12. Ein Verbund-Verkleidungspaneel (1), umfassend eine offene Kastenstruktur, die durch das Verfahren gemäß den vorhergehenden Ansprüchen erhalten wird.

## Revendications

1. Procédé pour la fabrication de panneaux de finition composites (1) comprenant des travaux mécaniques réalisés en étapes séparées, où ces étapes sont :
- fournir une tôle d'acier inoxydable (2) ayant au moins la face destinée à faire face à l'extérieur du panneau avec une finition de surface appropriée à l'utilisation ;
- effectuer des opérations d'usinage mécanique (3, 4, 5) sur ladite tôle (2) ;
- fournir une tôle de matériau de base (6) ;
- lier, par collage, ladite tôle d'acier inoxydable (2) à ladite tôle de matériau de base (6) ;
- effectuer des opérations d'usinage mécanique (3, 4, 5, 7) sur ladite tôle de matériau de base (6) dans une zone qui définit un bord périmétrique de ladite tôle de base ;
- lier, par collage, une tôle métallique d'équilibrage (8) à ladite tôle de matériau de base (6), sans impliquer ledit bord périphérique (6') ;
- plier les bords périmétraux (2', 6') de ladite tôle d'acier inoxydable (2) et de ladite tôle de matériau de base (6) qui sont liées ensemble, vers ladite tôle d'équilibrage (8) afin de définir une structure en caisson ouvert du panneau.

2. Processus selon la revendication 1, **caractérisé par le fait que** ladite tôle d'acier inoxydable (2) a une épaisseur supérieure à 0,3 mm.

3. Processus selon la revendication 2, **caractérisé par le fait que** ladite tôle d'acier inoxydable (2) a une épaisseur comprise entre 0,5 et 0,8 mm.

4. Processus selon la revendication 1, **caractérisé par le fait que** la finition de surface de ladite face de ladite tôle (2) est de type satiné, poli, poli miroir, coloré par électrolyse, coloré PVD, grenaillé, imprimé, gaufré, rigidifié, pourvu de motifs, de formes géométriques, de filigranes, de sérigraphie, etc.

5. Processus selon la revendication 1, **caractérisé par le fait que** ledit matériau de base (6) est choisi parmi composites plastiques, MDF, aluminium en feuille ou aluminium nid d'abeille.

6. Processus selon la revendication 1, **caractérisé par le fait que** lesdites opérations d'usinage mécanique (3, 4, 5), effectuées sur ladite tôle d'acier inoxydable (2) et ladite tôle de matériau de base (6) comprennent poinçonnage, encochage, pliage, perforation.

7. Processus selon les revendications 1 et 6, **caractérisé par le fait que** lesdites opérations d'usinage mécanique (3, 4, 5), effectuées sur ladite tôle de matériau de base (6) coopèrent avec les opérations d'usinage mécanique (3, 4, 5) effectuées sur ladite tôle d'acier inoxydable (2).

8. Processus selon la revendication 1, **caractérisé par le fait que** lesdites opérations d'usinage mécanique effectuées sur ladite tôle de matériau de base (6), comprennent le fraisage de lignes de pliage (7).

9. Processus selon la revendication 1, **caractérisé par le fait que** lesdites étapes de liage par collage comprennent l'utilisation des presses à rouleau.

10. Processus selon la revendication 1, **caractérisé par le fait que** ladite tôle d'équilibrage (8) est fabriquée en acier inoxydable ou acier galvanisé ou acier prépeint.

11. Processus selon la revendication 1, **caractérisé par le fait qu'**il comprend l'étape supplémentaire de fixer les bords périmétriques pliés (2', 6') de ladite tôle d'acier inoxydable (2) et de ladite tôle de matériau de base (6) à l'aide de moyens de liaison mécanique (9).

12. Un panneau de finition composite (1) comprenant une structure en caisson ouvert obtenue à l'aide du processus selon les revendications précédentes.
